# EUROPÄISCHE PATENTSCHRIFT

(11) **EP 3 006 160 B1**
(45) Veröffentlichungstag und Bekanntmachung des Hinweises auf die Patenterteilung: **05.04.2017**
(21) Anmeldenummer: 15182323.4
(22) Anmeldetag: 25.08.2015
(51) Int. Cl.: B24B 19/02, B24B 5/36, B23Q 9/00

(54) **BEARBEITUNGSEINRICHTUNG**
PROCESSING DEVICE
DISPOSITIF D'USINAGE

(30) Priorität: 06.10.2014 DE 102014220161
(43) Veröffentlichungstag der Anmeldung: 13.04.2016
(73) Patentinhaber: Siemens Aktiengesellschaft, 80333 München (DE)
(72) Erfinder: Visajtaev, Marat, 46236 Bottrop (DE)

(56) Entgegenhaltungen:
- SU-A1- 691 251
- US-A- 3 839 941
- US-A- 5 161 291

## Beschreibung

Die Erfindung betrifft eine Bearbeitungseinrichtung, insbesondere eine Schleifeinrichtung, für die Bearbeitung von Nuten in einem Bauteil und hier insbesondere von radial liegenden Nuten in einem Leitschaufelträger.

In Turbinenanlagen sind in den Verdichter- und Turbinenstufen jeweils Leiträder und Laufräder hintereinander angeordnet. Dabei bilden die Laufräder den bewegten bzw. rotierenden Teil der Turbinenanlage, mit welchem ein strömendes Fluid entweder verdichtet oder entspannt wird. Jedem Laufrad ist eine Leitvorrichtung nachgeordnet, welche die durch die Laufräder erzeugte Strömung definiert weiterleitet. Dabei sind die Leitvorrichtungen Laufräder abwechselnd hintereinandergeschaltet.

Eine Leitvorrichtung in einer Turbine besteht dabei aus einem äußeren Leitschaufelring, an dessen Innenseite in Umfangsrichtung eine Vielzahl von Leitschaufeln definiert angeordnet ist. Dieser äußere Leitschaufelring wird in einen sogenannten Leitschaufelträger eingebaut und zusammen mit diesem im Turbinengehäuse montiert. Hierzu wird der äußere Leitring in eine entsprechende Nut in der Innenfläche des Leitschaufelträgers eingesetzt. Üblicherweise sind auch die radial innenliegenden Enden der Leitschaufeln mit einem dort vorgesehenen inneren Leitring - auch Deckband genannt - verbunden, um den Fluidkanal gegen die Turbinenwelle abzudichten, Spaltverluste zu reduzieren und mehrere Leitschaufeln zur Beeinflussung des Schwingungsverhaltens mechanisch zu verwenden. Die Leitschaufeln werden hierbei mit den als Deckbändern ausgebildeten inneren Leitringen manuell vernietet. Hierfür muss der äußere Leitring mit den daran fixierten Leitschaufeln im Leitschaufelträger oder in einem entsprechenden Dummy positioniert sein.

Die Leitschaufelträger sind sowohl beim Vernieten der inneren Leitringe, als auch im Betrieb Beanspruchungen ausgesetzt. Insbesondere kann es dabei zu Rissbildungen in der radialen Ringnut an der Innenseite kommen. Das Entfernen dieser Risse erfolgt ebenfalls manuell durch einen Schleifvorgang. Dieser Vorgang ist jedoch relativ aufwändig, insbesondere wenn Risse im Eckenradius einer Nut ausgeschliffen werden müssen.

Die US 5,161,291 beschreibt eine Bearbeitungseinrichtung, insbesondere Schleifeinrichtung, für die Bearbeitung von Nuten in einem Bauteil, mit einem Basisträger, einer Spanneinrichtung, die an dem Basisträger angebracht und ausgebildet ist, um den Basisträger an dem zu bearbeitenden Bauteil zu fixieren, und einem Werkzeughalterkopf, der um eine Drehachse verschwenkbar gehalten ist und Befestigungsmittel zur Anbringung eines Bearbeitungswerkzeuges trägt.

Aufgabe der vorliegenden Erfindung ist es daher, eine Bearbeitungseinrichtung zu schaffen, mit der die Bearbeitung von radial liegenden Nuten, d.h. an der radialen Innen- oder Außenseite von ringförmigen Bauteilen und hier speziell die Ringnuten an der Innenseite eines Leitschaufelträgers bearbeitet werden können.

Zur Lösung dieser Aufgabe schafft die Erfindung eine Bearbeitungseinrichtung der vorgenannten Art mit einem Basisträger, einer Spanneinrichtung, die an dem Basisträger um eine Schwenkachse verschwenkbar angebracht und ausgebildet ist, um den Basisträger an dem zu bearbeitenden Bauteil zu fixieren, einer Führungsschiene, die an dem Basisträger in einer senkrecht zu der Schwenkachse liegenden Führungsebene geradlinig verschiebbar geführt ist, und einem Werkzeughalterkopf, der an der Führungsschiene um eine zu der Schwenkachse parallele Drehachse verschwenkbar gehalten ist und Befestigungsmittel zur Anbringung eines Bearbeitungswerkzeuges trägt.

Der Erfindung liegt damit die Überlegung zugrunde, eine Bearbeitungseinrichtung vorzusehen, die unmittelbar an dem zu bearbeitenden Bauteil fixiert und in der Weise ausgestaltet ist, dass ein Bearbeitungswerkzeug wie beispielsweise ein Schleifkopf entlang einer zu bearbeitenden Nut und hier insbesondere entlang des Eckenradius einer Nut verfahren werden kann, um die gewünschte Bearbeitung vorzunehmen, und dabei exakt geführt wird. Hierzu wird die Bearbeitungseinrichtung mittels der Spanneinrichtung an dem zu bearbeitenden Bauteil fixiert. Beispielsweise kann die Spanneinrichtung ausgebildet sein, um den Basisträger in einer zu bearbeitende Nut festzu spannen. Hierzu kann sie Spannmittel aufweisen, die ausgestaltet sind, um die gegen die Nutwände der zu bearbeitenden Nut insbesondere hydraulisch verspannt zu werden. Dabei setzt die Spanneinrichtung bevorzugt am Nutgrund auf, so dass sie an dem zu bearbeitenden Bauteil exakt abstützt. Nach der Fixierung an dem zu bearbeitenden Bauteil wird die Führungsschiene relativ zu der Spanneinrichtung geradlinig bewegt. Der Werkzeughalterkopf wird dabei durch die Schwerkraft oder entsprechende Andruckmittel an der Innenseite des zu bearbeitenden Bauteils in Anlage gehalten, so dass das Bearbeitungswerkzeug entlang der zu bearbeitenden Nut bewegt wird und dabei für die Bearbeitung notwendige Orientierung behält. Die erforderlichen Freiheitsgrade werden durch die gelenkigen Verbindungen zwischen dem Basisbauteil und der Führungsschiene einerseits und der Führungsschiene und dem Trägerkopf andererseits zur Verfügung gestellt.

Der Werkzeughalterkopf, der bevorzugt an einem vorderen Endbereich der Führungsschiene schwenkbar angebracht ist, trägt gemäß einer Ausführungsform der vorliegenden Erfindung an seinem unteren Endbereich Führungsrollen, wobei die Anordnung derart getroffen ist, dass die Führungsrollen auf den Nutgrund der zu bearbeitenden Nut aufgesetzt werden können, wenn der Basisträger an dem zu bearbeitenden Bauteil fixiert ist, so dass sich der Werkzeughalterkopf am Nutgrund abstützt und entlang der Nut leicht verfahren werden kann.

In Weiterbildung der Erfindung ist vorgesehen, dass die Befestigungsmittel einen Werkzeughalter umfassen, der an dem Werkzeughalterkopf fixiert ist. Bevorzugt ist der Werkzeughalter an dem Werkzeughalterkopf um eine parallel zur Schwenkachse verlaufende Einstellachse schwenkbar gehalten und in einer vorgegebenen Schwenklage fixierbar. Die Fixierung kann beispielsweise mittels einer Schraubverbindung erfolgen, welche dann auch die Einstellachse definieren kann. Die Verschwenkbarkeit des Werkzeughalters ermöglicht es, die Position des Bearbeitungswerkzeuges gegenüber der Nut vor der Bearbeitung exakt einzustellen.

Gemäß einer weiteren Ausführungsform der Erfindung ist vorgesehen, dass an dem Werkzeughalterkopf und insbesondere an dem Werkzeughalter ein rotierendes Bearbeitungswerkzeug befestigt ist, wobei die Rotationsachse des Werkzeuges in einer quer zu der Führungsebene der Führungsschiene gerichteten Ebene liegt und gegenüber der Führungsebene geneigt ist. Insbesondere kann die Rotationsachse des Werkzeuges in einer senkrecht zu der Führungsebene gerichteten Ebene liegen. Ferner ist die Rotationsachse des Werkzeuges gegenüber der Führungsebene um einen Winkel, welcher durch den geforderten Bearbeitungswinkel vorgegeben wird und insbesondere 45° beträgt, geneigt.

Schließlich ist das rotierende Bearbeitungswerkzeug gemäß einer bevorzugten Ausführungsform der Erfindung in der Richtung der Rotationsachse an dem Werkzeughalterkopf und insbesondere dem Werkzeughalter verstellbar geführt. Durch die axiale Verstellbarkeit entlang der Rotationsachse, die Schwenkbarkeit des Werkzeughalters gegenüber dem Werkzeughalterkopf und die Einstellbarkeit der Neigung der Rotationsachse kann das Bearbeitungswerkzeug, insbesondere das Schleifwerkzeug in der gewünschten Weise in der Nut positioniert werden.

Hinsichtlich weiterer Ausgestaltungen wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine Bearbeitungseinrichtung gemäß der vorliegenden Erfindung in Vorderansicht,
- Figur 2: die Bearbeitungseinrichtung in perspektivischer Ansicht von schräg hinten,
- Figur 3: die Bearbeitungseinrichtung aus Figur 1 an einem zu bearbeitenden Leitschaufelträger montiert,
- Figur 4: in vergrößerter Teilansicht den Teil der Bearbeitungseinrichtung mit Basisträger, Spanneinrichtung und Führungsschiene, von schräg oben hinten
- Figur 5: den hinteren Teil der Bearbeitungseinrichtung in perspektivischer Ansicht von schräg vorne oben,
- Figur 6: den vorderen Teil der Bearbeitungseinrichtung in perspektivischer Ansicht von schräg oben hinten, und
- Figur 7: den vorderen Bereich der Bearbeitungseinrichtung in perspektivischer Darstellung von schräg vorne oben

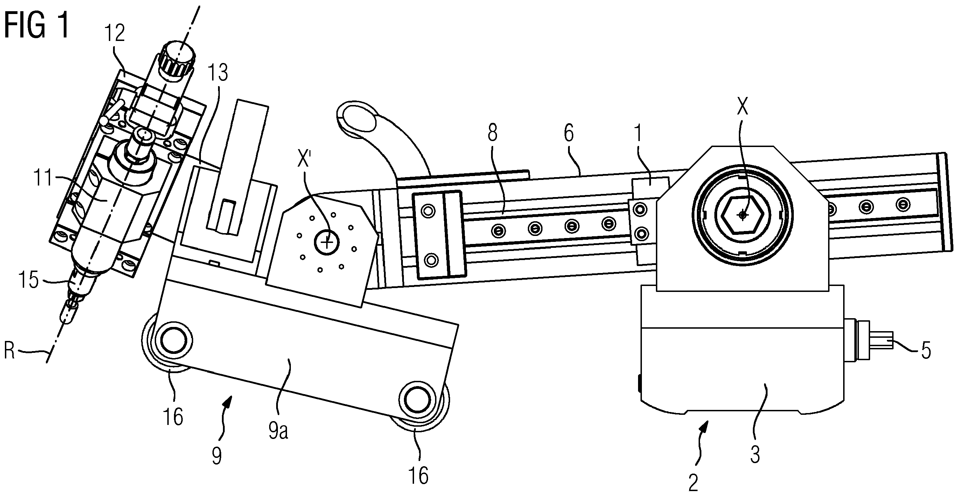

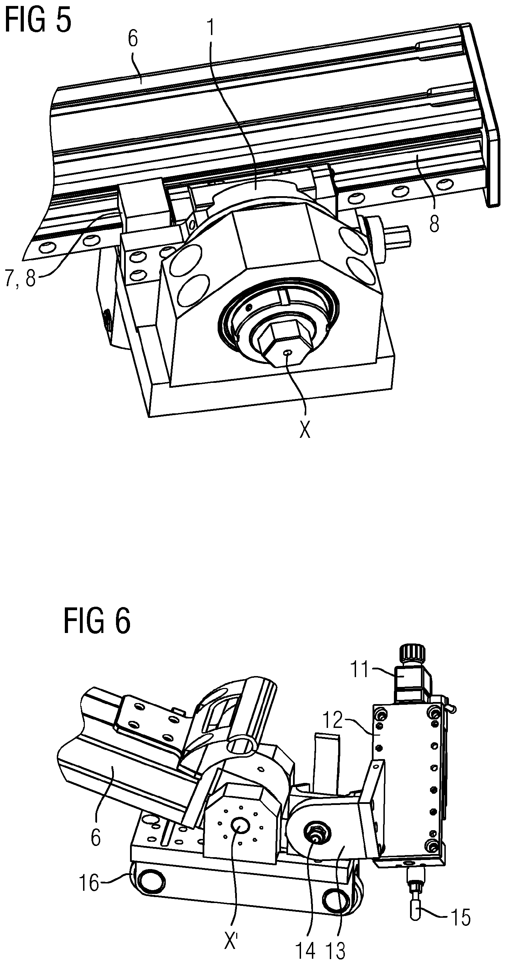

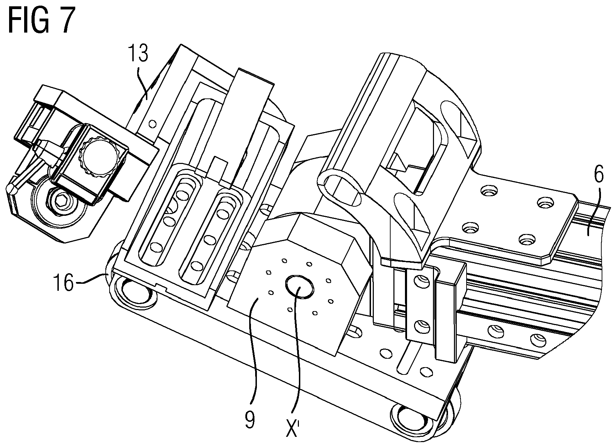

In den Figuren 1 bis 7 ist eine Bearbeitungseinrichtung gemäß der vorliegenden Erfindung dargestellt, die hier als Schleifeinrichtung ausgebildet ist und dazu dient, eine radiale Umfangsnut N an der Innenseite eines Laufschaufelträgers L zu bearbeiten, insbesondere um Risse im Bereich der Nut N zu beseitigen. Die Schleifeinrichtung umfasst einen Basisträger 1 sowie eine Spanneinrichtung 2, die an dem Basisträger 1 um eine Schwenkachse X drehbar angebracht und ausgebildet ist, um den Basisträger 1 an dem zu bearbeitenden Leitschaufelträger L zu fixieren. In dem dargestellten Ausführungsbeispiel ist die Spanneinrichtung 2 konkret ausgebildet, um den Basisträger 1 in der zu bearbeitenden Nut N festzuspannen. Hierzu besitzt die Spanneinrichtung 2 einen Grundkörper 3, der in die entsprechende Nut N eingesetzt werden kann und hierzu in seinem unteren Endbereich eine entsprechende Breite besitzt. In dem Grundkörper 3 sind Spannkolben 4 gehalten, die hydraulisch oder pneumatisch parallel zu der Schwenkachse X aus dem Grundkörper 3 ausgefahren werden können, so dass sie gegen die Nutwände der zu bearbeitenden Nut N gedrückt werden können, um auf diese Weise den Grundkörper 3 mit den Nutwänden zu verspannen. Dabei wird der Grundkörper 3 bevorzugt auf den Nutgrund aufgesetzt, so dass er eine stabile Position besitzt.

Die Betätigung der Spanneinrichtung 2 erfolgt über eine Spannschraube 5, die in den Grundkörper 3 eingeschraubt wird, um einen Betätigungskolben, der in einen innerhalb des Grundkörpers 3 vorgesehenen Hydraulikmittelraum eingreift, in diesen Hydraulikmittelraum zu bewegen und damit den Hydraulikdruck in dem Hydraulikmittelraum zu erhöhen.

Die Schleifeinrichtung umfasst weiterhin eine Führungsschiene 6, die an dem Basisträger 1 in einer senkrecht zu der Schwenkachse X liegenden Führungsebene - der Bildebene der Figur 1 - geradlinig verschiebbar geführt ist. Hierzu sind an dem Basisträger 1 mehrere Führungsklauen 7 ausgebildet, die mit entsprechenden Führungsnuten 8 der Führungsschiene 6 in Eingriff stehen.

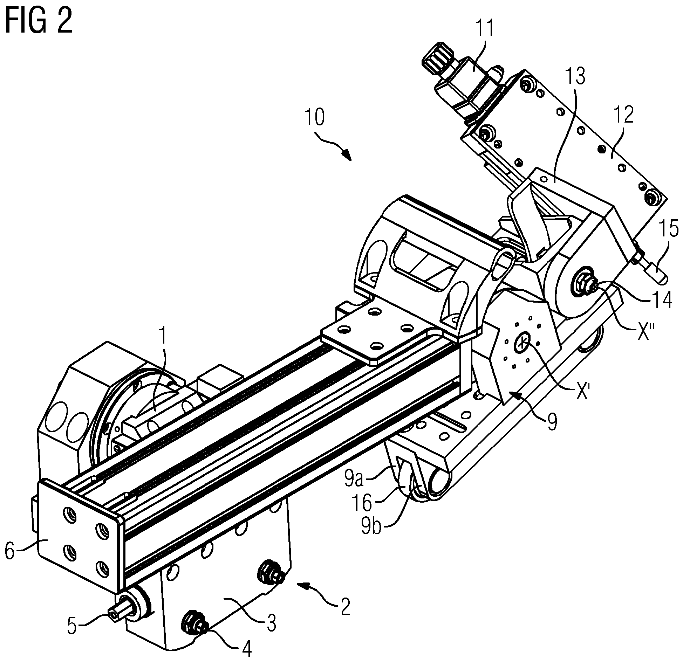

An einem vorderen axialen Endbereich der Führungsschiene 6 ist ein Werkzeughalterkopf 9 vorgesehen, der an der Führungsschiene 6 um eine zu der Schwenkachse X parallele Drehachse X' verschwenkbar gehalten ist. Der Werkzeughalterkopf 9 trägt Befestigungsmittel 10 zur Anbringung einer Schleifspindel 11. Konkret ist die Schleifspindel 11 in Richtung ihrer Rotationsachse R verstellbar an einem plattenförmigen Werkzeughalter 12 gehalten. Der Werkzeughalter 12 wiederum ist über einen Befestigungswinkel 13 an dem Werkzeughalterkopf 9 fixiert. Wie insbesondere die Figur 2 gut erkennen lässt, ist der Befestigungswinkel 13 an dem Werkzeughalterkopf 9 über eine einzelne Schraube 14 fixiert, die sich parallel zur Schwenkachse X bzw. der Drehachse X' erstreckt. Nach dem Lösen der Schraubverbindung ist es daher möglich, den Befestigungswinkel 13 gegenüber dem Werkzeughalterkopf 9 um eine durch die Schraubverbindung definierte Einstellachse X" zu verschwenken und dann den Befestigungswinkel 13 durch Fixierung der Schraubverbindung in der Lage gewünschten zu arretieren.

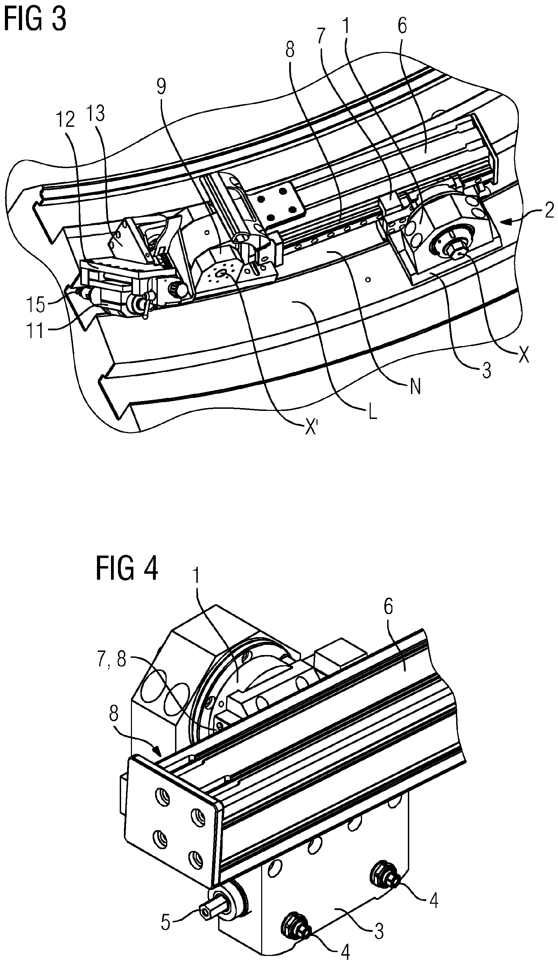

Wie die Figuren 2, 6 und 7 erkennen lassen, liegt die Rotationsachse R der Schleifspindel 11 in einer senkrecht zu der durch die Führungsschiene 6 definierten Führungsebene gerichteten Ebene, wobei sie gegenüber der Führungsebene um einen vorgegebenen Winkel, der hier etwa 45° beträgt, geneigt ist. Diese Anordnung erlaubt es, den Schleifkopf eines in der Schleifspindel 11 eingespannten Schleifwerkzeuges 15 gegenüber einem zu bearbeitenden Bereich der Nut N, insbesondere gegenüber dem Eckenbereich der Nut N, zu positionieren, wie dies in Figur 3 erkennbar ist.

An seinem unteren Endbereich trägt der Werkzeughalterkopf 9 zwei Führungsrollen 16. Die Anordnung ist dabei so getroffen, dass die Führungsrollen 16auf den Nutgrund der zu bearbeitenden Nut N aufgesetzt werden können. Konkret besitzt der Werkzeughalterkopf 9 zwei nach unten abragende Stege 9a, 9b, zwischen denen die Führungsrollen 16 rotierend gehalten sind. Die Breite der Stege 9a, 9b und der Abstand zwischen den Stegen 9a, 9b sind dabei so gewählt, dass die Führungsrollen mit den Stegen 9a, 9b in die zu bearbeitende Nut N eingesetzt werden können.

Im Betrieb wird die Bearbeitungseinrichtung mittels der Spanneinrichtung 2 an dem zu bearbeitenden Leitschaufelträger L fixiert. Hierzu wird der Grundkörper 3 der Spanneinrichtung in die Nut N eingesetzt, bis sie in Kontakt mit dem Nutgrund kommt. Anschließend werden die Spannkolben 4 ausgefahren, um den Grundkörper 3 der Spanneinrichtung in der Nut N festzuspannen, indem die Spannkolben 4 gegen die Nutwände gedrückt werden. Die Betätigung der Spannkolben 4 erfolgt durch Drehen der Spannschraube 5. Nach der Fixierung der Bearbeitungseinrichtung an dem Leitschaufelträger L wird der Werkzeughalterkopf 9 in die Nut N eingesetzt, bis die Führungsrollen 16 auf den Nutgrund aufsetzen. Eine derartige Positionierung ist aufgrund der relativen Verschwenkbarkeit zwischen dem Werkzeughalterkopf 9 und der Führungsschiene 6 einerseits und der Führungsschiene 6 und dem Basisträger 1 andererseits möglich.

Abschließend wird die Schleifspindel 11 entlang ihrer Rotationsachse R so weit verstellt, bis sie ihre gewünschte Bearbeitungsposition einnimmt. Während des Schleifvorgangs wird die Führungsschiene 6 zusammen mit dem Werkzeughalterkopf 9 und der daran gehaltenen Schleifspindel 11 gegenüber dem ortsfest an dem Leitschaufelträger L fixierten Basisträger 1 geradlinig verstellt, um die Schleifspindel 11 mit dem darin gehaltenen Schleifwerkzeug 15 parallel zu der Nut zu bewegen. Die Schleifspindel 11 führt dabei tatsächlich eine kreisförmige Bewegung entlang der Nut N aus, weil die Führungsrollen 16 auf dem Nutgrund gehalten werden. Die erforderlichen Freiheitsgrade werden durch die Schwenkachse X bzw. die Drehachse X' geschaffen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Bearbeitungseinrichtung,
insbesondere Schleifeinrichtung, für die Bearbeitung von Nuten (N) in einem Bauteil (L),
insbesondere von radial liegenden Nuten (N) in einem Leitschaufelträger, mit einem Basisträger (1), einer Spanneinrichtung (2), die an dem Basisträger (1) um eine Schwenkachse (X) verschwenkbar angebracht und ausgebildet ist, um den Basisträger (1) an dem zu bearbeitenden Bauteil (L) zu fixieren, einer Führungsschiene (6), die an dem Basisträger (1) in einer senkrecht zu der Schwenkachse (X) liegenden Führungsebene geradlinig verschiebbar geführt ist, und einem Werkzeughalterkopf (9), der an der Führungsschiene (6) um eine zu der Schwenkachse (X) parallele Drehachse (X') verschwenkbar gehalten ist und Befestigungsmittel (10) zur Anbringung eines Bearbeitungswerkzeuges trägt.

2. Bearbeitungseinrichtung nach Anspruch 1,
**dadurch gekennzeichnet, dass**
die Spanneinrichtung (2) ausgebildet ist, um den Basisträger (1) in einer zu bearbeitenden Nut (N) festzuspannen.

3. Bearbeitungseinrichtung nach Anspruch 2,
**dadurch gekennzeichnet, dass**
die Spanneinrichtung (2) Spannmittel aufweist, die ausgebildet sind, um gegen die Nutwände der zu bearbeitenden Nut (N) insbesondere hydraulisch verspannt zu werden.

4. Bearbeitungseinrichtung nach einem der vorherigen Ansprüche,
**dadurch gekennzeichnet, dass**
der Werkzeughalterkopf (9) an einem vorderen Endbereich der Führungsschiene (6) schwenkbar angebracht ist.

5. Bearbeitungseinrichtung nach einem der vorherigen Ansprüche,
**dadurch gekennzeichnet, dass**
der Werkzeughalterkopf (9) an seinem unteren Endbereich Führungsrollen trägt,
wobei die Anordnung derart getroffen ist, dass die Führungsrollen (16) auf den Nutgrund der zu bearbeitenden Nut (N) aufgesetzt werden können.

6. Bearbeitungseinrichtung nach einem der vorherigen Ansprüche,
**dadurch gekennzeichnet,**
**dass** die Befestigungsmittel (10) einen Werkzeughalter (12) umfassen, der an dem Werkzeughalterkopf (9) fixiert ist.

7. Bearbeitungseinrichtung nach Anspruch 6,
**dadurch gekennzeichnet, dass**
der Werkzeughalter (12) an dem Werkzeughalterkopf (9) um eine parallel zur Schwenkachse (X) verlaufende Einstellachse (X") verschwenkbar gehalten und in einer vorgegebenen Schwenklage fixierbar ist,
wobei die Fixierung insbesondere mittels einer Schraubverbindung erfolgt, welche die Einstellachse (X") definiert.

8. Bearbeitungseinrichtung nach einem der vorhergehenden Ansprüche,
**dadurch gekennzeichnet, dass**
an dem Werkzeughalterkopf (9) und
insbesondere an dem Werkzeughalter (12) ein rotierendes Bearbeitungswerkzeug befestigt ist,
wobei die Rotationsachse (R) des Werkzeuges in einer quer zu
der Führungsebene der Führungsschiene (6) gerichteten Ebene liegt und gegenüber der Führungsebene geneigt ist.

9. Bearbeitungseinrichtung nach Anspruch 8,
**dadurch gekennzeichnet, dass**
die Rotationsachse (R) des Werkzeuges in einer senkrecht zu der Führungsebene gerichteten Ebene liegt.

10. Bearbeitungseinrichtung nach Anspruch 8 oder 9,
**dadurch gekennzeichnet, dass**
die Rotationsachse (R) des Werkzeuges gegenüber der Führungsebene um einen vorgegebenen Winkel von insbesondere 45° geneigt ist.

11. Bearbeitungseinrichtung nach einem der Ansprüche 8 bis 10,
**dadurch gekennzeichnet, dass**
das rotierende Bearbeitungswerkzeug in der Richtung der Rotationsachse (R) an dem Werkzeughalterkopf (9) und insbesondere dem Werkzeughalter (12) verstellbar geführt ist.

12. Bearbeitungseinrichtung nach einem der vorherigen Ansprüche,
**dadurch gekennzeichnet, dass**
das Bearbeitungswerkzeug eine Schleifspindel (11) ist oder eine Schleifspindel (11) umfasst.

## Claims

1. Machining device,
in particular grinding device, for the machining of slots (N) in a component (L),
in particular radially lying slots (N) in a stationary blade carrier, with a base carrier (1), a clamping device (2), which is attached to the base carrier (1) pivotably about a pivot axis (X) and is designed to fix the base carrier (1) on the component (L) to be machined, a guiding rail (6), which is guided on the base carrier (1) displaceably in a straight line in a guiding plane lying perpendicularly in relation to the pivot axis (X), and a tool holder head (9), which is held on the guiding rail (6) pivotably about a rotation axis (X') parallel to the pivot axis (X) and carries fastening means (10) for the attachment of a machining tool.

2. Machining device according to Claim 1,
**characterized in that**
the clamping device (2) is designed to clamp the base carrier (1) securely in a slot (N) to be machined.

3. Machining device according to Claim 2,
**characterized in that**
the clamping device (2) has clamping means that are designed to be braced, in particular hydraulically, against the slot walls of the slot (N) to be machined.

4. Machining device according to one of the preceding claims,
**characterized in that**
the tool holder head (9) is attached pivotably on a front end region of the guiding rail (6).

5. Machining device according to one of the preceding claims,
**characterized in that**
the tool holder head (9) carries guiding rollers at its lower end region,
the arrangement being set up in such a way that the guiding rollers (16) can be placed onto the slot base of the slot (N) to be machined.

6. Machining device according to one of the preceding claims,
**characterized in that**
the fastening means (10) comprises a tool holder (12), which is fixed on the tool holder head (9).

7. Machining device according to Claim 6,
**characterized in that**
the tool holder (12) is held on the tool holder head (9) pivotably about a setting axis (X") running parallel to the pivot axis (X) and can be fixed in a predetermined pivoting position,
the fixing being performed in particular by means of a screw connection, which defines the setting axis (X").

8. Machining device according to one of the preceding claims,
**characterized in that**
on the tool holder head (9), and
in particular on the tool holder (12), there is fastened a rotating machining tool,
the axis of rotation (R) of the tool lying in a plane that is directed transversely in relation to the guiding plane of the guiding rail (6) and being inclined with respect to the guiding plane.

9. Machining device according to Claim 8,
**characterized in that**
the axis of rotation (R) of the tool lies in a plane that is directed perpendicularly in relation to the guiding plane.

10. Machining device according to Claim 8 or 9,
**characterized in that**
the axis of rotation (R) of the tool is inclined with respect to the guiding plane by a predetermined angle of in particular 45°.

11. Machining device according to one of Claims 8 to 10,
**characterized in that**
the rotating machining tool is guided adjustably in the direction of the axis of rotation (R) on the tool holder head (9) and in particular the tool holder (12).

12. Machining device according to one of the preceding claims,
**characterized in that**
the machining tool is a grinding spindle (11) or comprises a grinding spindle (11).

## Revendications

1. Dispositif d'usinage,
notamment dispositif de meulage pour l'usinage de rainures ( N ) dans une pièce ( L ),
notamment de rainures ( N ) radiales dans un support d'aube directrice, comprenant un support ( 1 ) de base, un dispositif ( 2 ) de serrage, qui est monté et constitué sur le support ( 1 ) de base de manière à pouvoir pivoter autour d'un axe ( X ) de pivotement afin d'immobiliser le support ( 1 ) de base sur la pièce ( L ) à usiner, une barre ( 6 ) de guidage, qui est guidée coulissante en ligne droite dans un plan de guidage perpendiculaire à l'axe ( X ) de pivotement et une tête ( 9 ) de porte-outil, qui est maintenue sur la barre ( 6 ) de guidage avec possibilité de pivoter autour d'un axe ( X' ) de rotation parallèle à l'axe ( X ) de pivotement et qui porte des moyens ( 10 ) de fixation pour mettre un outil d'usinage.

2. Dispositif d'usinage suivant la revendication 1,
**caractérisé en ce que**
le dispositif ( 2 ) de serrage est constitué pour bloquer le support ( 1 ) de base dans une rainure ( N ) à usiner.

3. Dispositif d'usinage suivant la revendication 2,
**caractérisé en ce que**
le dispositif ( 2 ) de serrage a des moyens de serrage constitués pour être bloqué, notamment hydrauliquement, sur les parois de la rainure ( N ) à usiner.

4. Dispositif d'usinage suivant l'une des revendications précédentes,
**caractérisé en ce que**
la tête ( 9 ) du porte-outil est montée pivotante sur une partie d'extrémité avant de la barre ( 6 ) de guidage.

5. Dispositif d'usinage suivant l'une des revendications précédentes,
**caractérisé en ce que**
la tête ( 9 ) du porte-outil porte des roulettes de guidage à sa partie d'extrémité inférieure,
l'agencement étant tel que les roulettes ( 16 ) de guidage peuvent être mises sur le fond de la rainure ( N ) à usiner.

6. Dispositif d'usinage suivant l'une des revendications précédentes,
**caractérisé en ce que**
les moyens ( 10 ) de fixation comprennent un porte-outil ( 12 ), qui est immobilisé sur la tête ( 9 ) du porte-outil.

7. Dispositif d'usinage suivant la revendication 6,
**caractérisé en ce que**
le porte-outil ( 12 ) peut être maintenu sur la tête ( 9 ) du porte-outil avec possibilité de pivoter autour d'un axe ( X " ) de réglage s'étendant parallèlement à l'axe ( X ) de pivotement, et peut être immobilisé dans une position de pivotement donnée à l'avance,
l'immobilisation s'effectuant notamment au moyen d'un vissage qui définit l'axe ( X " ) de réglage.

8. Dispositif d'usinage suivant l'une des revendications précédentes,
**caractérisé en ce que**
un outil d'usinage tournant est fixé sur la tête ( 9 ) du porte-outil et notamment sur le porte-outil ( 12 ), l'axe ( R ) de rotation de l'outil se trouvant dans un plan dirigé transversalement au plan de guidage de la barre ( 6 ) de guidage et étant incliné par rapport au plan de guidage.

9. Dispositif d'usinage suivant la revendication 8,
**caractérisé en ce que**
l'axe ( R ) de rotation de l'outil est dans un plan dirigé perpendiculairement au plan de guidage.

10. Dispositif d'usinage suivant la revendication 8 ou 9,
**caractérisé en ce que**
l'axe ( R ) de rotation de l'outil est incliné par rapport au plan de guidage d'un angle donné à l'avance de notamment 45°.

11. Dispositif d'usinage suivant l'une des revendications 8 à 10,
**caractérisé en ce que** l'outil d'usinage tournant est guidé de manière réglable dans la direction de l'axe ( R ) de rotation sur la tête ( 9 ) du porte-outil et notamment du porte-outil ( 12 ).

12. Dispositif d'usinage suivant l'une des revendications précédentes
**caractérisé en ce que**
l'outil d'usinage est une broche ( 11 ) de meulage ou comprend une broche ( 11 ) de meulage.
